# EUROPEAN PATENT SPECIFICATION

(11) **EP 4 184 144 B1**
(45) Date of publication and mention of the grant of the patent: **28.05.2025**
(21) Application number: 22207748.9
(22) Date of filing: 16.11.2022
(51) Int. Cl.: G01N 1/28, B23Q 3/10, B26F 3/00, G01N 19/06, B25B 5/14

(54) **JIG FOR CLAMPING SAMPLES DISINTEGRATING BY PULSATING WATER JET**
SPANNVORRICHTUNG ZUM SPANNEN VON DURCH PULSIERENDEN WASSERSTRAHL ZERFALLENDEN PROBEN
GABARIT POUR SERRER DES ÉCHANTILLONS SE DÉSINTÉGRANT PAR JET D'EAU PULSÉ

(30) Priority: 19.11.2021 SK 500102022
(43) Date of publication of application: 24.05.2023
(73) Proprietor: Technická Univerzita V Kosiciach, 04200 Kosice-Sever (SK)
(72) Inventor: Cuha, Dominik, 08005 Presov (SK); Hatala, Michal, 08005 Presov (SK)

(56) References cited:
- EP-A1- 3 366 421
- US-A1- 2013 239 401
- US-A1- 2021 245 314
- CUHA DOMINIK ET AL: "Effect of a modified impact angle of an ultrasonically generated pulsating water jet on aluminum alloy erosion using upward and downward stair trajectory", WEAR, ELSEVIER SEQUOIA, LAUSANNE, CH, vol. 500, 29 April 2022 (2022-04-29), XP087064116, ISSN: 0043-1648, [retrieved on 20220429], DOI: 10.1016/J.WEAR.2022.204369

## Description

### Field of invention

The invention relates to a clamping jig for samples, which are intended for research experimental work for detecting disintegrating effects of a pulsating water jet. The samples are clamped from their lateral sides on a clamping plate of the jig. The invention can be classified in the field of measurement and testing.

### Background to the invention

Clamping of workpieces is most often carried out by means of tables with milled T-slots and, if necessary, corresponding clamps. The shape, design, and method of clamping depends on the shape of the workpiece and the way it is machined. US5060920 A (ENGIBAROV EDDY) of 29 October 1991 describes a workpiece clamping method wherein the removable jaw of the clamp is connected to the remainder thereof by a herringbone joint and pressed against the workpiece using a tightening screw by forcing a wedge-shaped counter piece into a similarly shaped recess. Another method of clamping workpieces is represented by the invention US7753350 B2 (BARZIZA SAMUEL W.) of 13 July 2010, which uses an assembly of blocks with T-slots and a clamp pressed against the material from the top or a clamp with a hexagonal head and an eccentric screw from the sides of the workpiece. The document DE102017001782 B3 (LUDWIG EHRHARDT GMBH) of 12 April 2018 describes the prevention of movement of the clamp and thus the workpiece by means of a locking rotary screw with a tapered surface at its end, which screws into the clamping body on the principle of clamping jaws. The invention US2021245314 A1 (PULSIFER DEREK EDWARD) 12 August 2021 uses for the stated purpose clamps made up of two counter pieces with a defined common contact surface, wherein the locking of their mutual position is made possible by means of screw joints. One of the counter-pieces is prevented from moving relative to the clamping plate by a screw, and the workpiece is prevented from moving by pressing the second counter-piece against the first. The workpiece clamping is also carried out by means of suction effect and the creation of vacuum under the bottom surface of the workpiece, which constitutes the invention US20130239401 A1 (FANUC CORPORATION) 19 September 2013.

The aforementioned inventions do not contain technical solutions which provide satisfactory advantages for clamping samples disintegrated by pulsating water jet. In particular, these are improved clamping time efficiency, the research findings obtained on the disintegration effects of pulsating water jet unaffected by the accumulated liquid layer, and the simple, fast and inexpensive replaceability of the clamping surface in case of its damage.

### Summary of the invention

The summary of the invention consists in effectively clamping the samples from their lateral sides on the clamping plate of the jig. The clamping is carried out by placing the samples on the removable flanges of the clamping plate, which has height-adjustable stop rails mounted on bolts around its periphery, and in which slots are milled in both the longitudinal and transverse directions. The resulting islands are fitted with flanges, which exceed the dimensions of the islands and thus form T-slots with the slots. A T-nut is inserted into the T-slot close to the sample and a clamp is placed over the T-nut. The T-nut and the clamp are screwed together, thereby securing the clamp against movement over the surface of the clamping plate flanges. Screws are screwed into the side of the clamp, passing through the entire dimension of the clamp and exiting on the opposite side. Using the screws in the side of the clamp, the sample is pressed against the stop rails of the clamping plate, thereby securing the sample against movement. The necessary number of clamps shall be used to prevent movement of the samples. At the same time, the height of the stop rails, the clamp and the head of the screw connecting the T-nut and the clamp shall not exceed the height of the sample. Thus, no part of the jig protrudes above the sample surface, minimising the risk of the robot head colliding with the jig-sample system. Clamping samples with the jig is time efficient. The time efficiency of clamping results mainly from the use of stop rails. Clamping samples from their sides also allows the entire top surface of the sample to be used for disintegration without the need to overclamp the sample. The lateral clamping of the samples by means of height-adjustable stop rails makes it possible to obtain an unaffected disintegration effect of the pulsating water jet due to the unrestricted drainage of the liquid from the sample surface.

### Brief description of the drawings

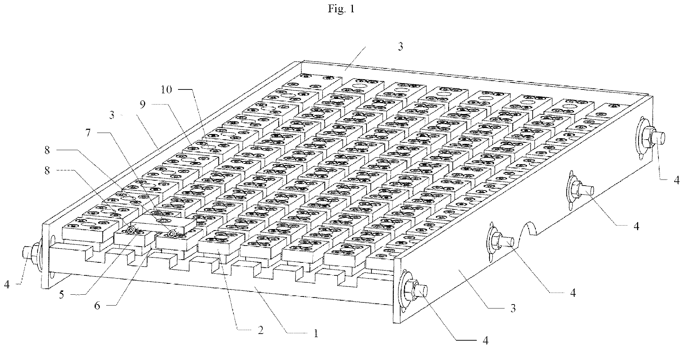

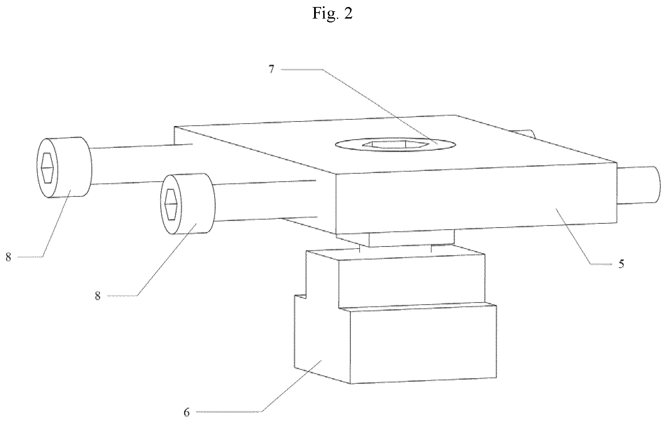

Fig. 1 shows an example of a clamping plate design. Fig. 2 shows a detail of the clamping system - the clamp, T-nut, locking screw, and clamping screws.

### Detailed description

The jig adapted to clamping samples disintegrating by pulsating water jet comprises a clamping plate 1, flanges 2, stop rails 3, bolts 4, a clamp 5, a T-nut 6, a locking screw 7, clamping screws 8, screws 9, and openings 10. The main component of the jig is the clamping plate 1 with both transversely and longitudinally milled slots, on which the flanges 2 are fixed by means of screws 9. In the lateral peripheral sides of the clamping plate 1, the plane of which is perpendicular to the plane of the seating surface of the islands and the flanges 2, bolts 4 are screwed to accommodate the height-adjustable stop rails 3. The flanges 2, together with the slots in the clamping plate 1, form the T-slotted guide for the T-nut 6. The top surface of the flanges 2 serves as a seating surface for the clamp 5. Securing the relative position of the clamp 5 and the T-nut 6 and preventing their movement relative to the flanges 2 is made possible by means of a locking screw 7. In the clamp 5, clamping screws 8 are screwed into its lateral side, passing through its entire dimension.

The primary function of the invention is to clamp the samples quickly and reliably from their lateral sides in order to disintegrate them by means of a pulsating water jet.

### Industrial applicability

The industrial applicability of the invention lies in the fast and reliable clamping of samples used for experimental detection of disintegrating effects of pulsating water jet under laboratory conditions. The lateral clamping of the samples enables the entire top surface of the material to be efficiently used to perform the experiment without the simultaneous need to re-clamp the samples, which considerably reduces the handling times. A system of height-adjustable stop rails makes it possible to obtain an unaffected disintegration effect of the pulsating water jet due to unhindered liquid outflow. It also increases work safety during experiments, as the risk of the robot head colliding with jig components is minimized since the sample represents the highest point in the jig-sample system. The technical solution of the jig takes into account the possible damage of the clamping surface by the impact of the pulsating water jet and allows its quick and easy replacement and restoration of the jig functionality. The results of the experiments will be used for further research in the field and for potential use of the technology in the future in the fields of medicine, engineering, construction, etc.

## Claims

1. Jig adapted to clamping samples disintegrating by pulsating water jet, wherein it is comprising a clamping plate (1) with both transversely and longitudinally milled slots, on which are fixed clamping flanges (2) by means of screws (9), wherein the clamping flanges (2) together with the slots in the clamping plate (1) form the T-slotted guide for the T-nut (6) inserted in the T-slots for securing the clamp (5) located on the top surface of the flange (2), wherein the clamp (5) comprises a locking screw (7) and clamping screws (8), which are screwed into lateral side of the clamp (5) passing through its entire dimension and in the lateral peripheral sides of the clamping plate (1) height-adjustable stop rails (3)are mounted on bolts (4) located on the sides of the clamping plate (1).

## Patentansprüche

1. Spannvorrichtung zum Einspannen von Proben, die durch einen pulsierenden Wasserstrahl zersetzt werden, wobei sie eine Spannplatte (1) mit sowohl quer als auch längs gefrästen Schlitzen umfasst, auf denen Spannflansche (2) mittels Schrauben (9) befestigt sind, wobei die Spannflansche (2) zusammen mit den Schlitzen in der Spannplatte (1) die T-förmige Nut-führung für die T-Mutter (6) bilden, die in die T-Nuten eingesetzt ist, um Befestigung der auf der Oberseite des Flansches (2) befindlichen Klemme (5) eingesetzt ist, wobei die Klemme (5) eine Sicherungsschraube (7) und Klemmschrauben (8) umfasst, die in die seitlichen Seiten der Klemme (5) eingeschraubt sind und durch ihre gesamte Abmessung hindurchgehen, und in den seitlichen Umfangsseiten der Klemmplatte (1) höhenverstellbare Anschlagschienen (3) auf Bolzen (4) montiert sind, die sich an den Seiten der Klemmplatte (1) befinden.

## Revendications

1. Gabarit adapté au serrage d'échantillons se désagrégeant par jet d'eau pulsé, comprenant une plaque de serrage (1) avec des fentes fraisées transversalement et longitudinalement, sur laquelle sont fixées des brides de serrage (2) au moyen de vis (9), les brides de serrage (2) formant avec les fentes de la plaque de serrage (1) le guide à rainures en T pur l'écrou en T (6) inséré dans les rainures en T pour fixer la pince (5) située sur la surface supérieure de la bride (2), dans lequel la pince (5) comprend une vis de blocage (7) et des vis de serrage (8), qui sont visées dans les côtés latéraux de la pince (5) en passant par toute sa dimension et dans les côtés périphériques latéraux de la plaque de serrage (1) des rails de butée réglables en hauteur (3) sont montés sur des boulons (4) situés sur les côtés de la plaque de serrage (1).
